**Europäisches Patentamt**

**European Patent Office**

**Office européen des brevets**

(19)

(11) Veröffentlichungsnummer : **0 401 242 B1**

(12) **EUROPÄISCHE PATENTSCHRIFT**

(45) Veröffentlichungstag der Patentschrift :
**08.01.92 Patentblatt 92/02**

(51) Int. Cl.⁵ : **B60T 8/74, B60T 8/66**

(21) Anmeldenummer : **89902246.1**

(22) Anmeldetag : **02.02.89**

(86) Internationale Anmeldenummer :
**PCT/EP89/00089**

(87) Internationale Veröffentlichungsnummer :
**WO 89/08038 08.09.89 Gazette 89/21**

(54) **ANTIBLOCKIERREGELSYSTEM.**

(30) Priorität : **26.02.88 DE 3806080**

(43) Veröffentlichungstag der Anmeldung :
**12.12.90 Patentblatt 90/50**

(45) Bekanntmachung des Hinweises auf die
Patenterteilung :
**08.01.92 Patentblatt 92/02**

(84) Benannte Vertragsstaaten :
**DE FR GB IT SE**

(56) Entgegenhaltungen :
**WO-A-88/03490**
**DE-A- 3 418 520**

(56) Entgegenhaltungen :
**Patent Abstracts of Japan, vol. 10, no. 378,**
**M546, abstract from JP61-169361, publ. 1986-**
**07-31 (Nissan Motor Co. Ltd.), see abstract, fig.**
**2**

(73) Patentinhaber : **ROBERT BOSCH GmbH**
**Postfach 10 60 50**
**W-7000 Stuttgart 10 (DE)**

(72) Erfinder : **JONNER, Wolf-Dieter**
**Burgunder Strasse 25**
**W-7141 Beilstein-Schmidhausen (DE)**

(74) Vertreter : **Kammer, Arno, Dipl.-Ing.**
**ROBERT BOSCH GmbH Zentralstelle**
**Patente-Elektronik Postfach 10 60 50**
**W-7000 Stuttgart 1 (DE)**

## Beschreibung

### Stand der Technik

Es ist bekannt, daß bei Fahrzeugen mit wenigstens einer Differentialsperre, z. B. bei allradgetriebenen Fahrzeugen und bei Anwendung eines Antiblockierregelsystems diese Sperren die Wirkung des ABS negativ beeinflussen. Im Extremfall kann es sogar zum Blockieren der Räder trotz ABS kommen. Es ist zur Vermeidung dieses Nachteils bereits bekannt, die Sperren bei Bremseinsatz oder bei Einsetzen der ABS - Regelung durch ein dazu erzeugtes Schaltsignal zu lösen z. B. aus Patent Abstracts of Japan, Band 10, Nr. 378 (M-546), & JP/61-169361. Die Verwendung des Schaltsignals bei Bremsbeginn führt zu einem häufigen und für den Sperrmechanismus nachteiligen Schalten der Sperren. Da man die gesperrten Räder auch bei Verwendung eines ABS zum Blockieren bringen kann, läßt sich ein erst bei Einsetzen des ABS erzeugtes Schaltsignal nicht zur sicheren Entsperrung ausnutzen.

### Vorteile der Erfindung

Überraschenderweise wird der angestrebte Erfolg durch die erfindungsgemäße Kombination der durch Verwendung der Radverzögerungssignale und durch die Festsetzung der Schwelle auf einen nur bei hohem $\mu$ und damit selten auftretenden Fahrzeugverzögerwert von z. B. 4 m/sec$^2$ erreicht. Da bei hohem $\mu$ die Radgeschwindigkeit etwa der Fahrzeuggeschwindigkeit entspricht, können dort nur bei starkem Bremsen solche Radverzögerungen erreicht werden. Ein solch starkes Bremsen kann jedoch auch die Antiblockierregelung auslösen, weshalb es sinnvoll ist, die Sperren zu lösen. Das Entsperren ist aber auf seltene Fälle beschränkt. Anderseits erreicht bei glatter Fahrbahn die Fahrzeugverzögerung keinen derart hohen Wert; jedoch können dann die Fahrzeugräder so stark verzögert werden, daß die Schwelle überschritten und das Schaltsignal erzeugt wird. Durch den erfindungsgemäß angewandten Trick wird damit die gewünschte Wirkung erreicht, nämlich ein nicht unnötig häufiges Schalten der Sperren einerseits, aber trotzdem ein Ansprechen der Entsperrung bei Bremsen auf geringeren $\mu$. Durch Verwendung eines gesonderten Fahrzeugverzögerungsmessers ließe sich die der Erfindung zugrundeliegende Aufgabe nicht lösen. In diesem Falle müßte wegen der Entsperrung bei niedrigem $\mu$ der Schwellwert tief gelegt werden, was zu einer hohen Schalthäufigkeit führen würde.

### Figurenbeschreibung

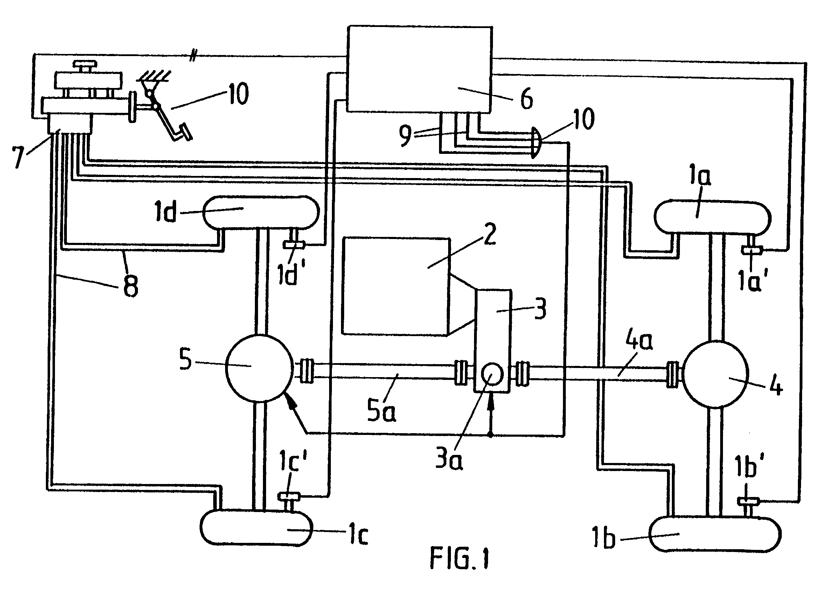

Anhand des Ausführungsbeispiels der Zeichnung soll die Erfindung näher erläutert werden.

Die Zeichnung zeigt ein vierradgetriebenes Fahrzeug, dessen Räder 1a - 1d alle angetrieben werden. Das vom Motor 2 über das Getriebe 3 angegebene Moment wird über eine Differentialsperre 3a (Längssperre) auf die Antriebswellen 4a und 5a und über eine weitere Differentialsperre 5 (Quersperre) und ein Ausgleichsgetriebe 4 auf die Räder 1a - 1d geleitet. Die Differentialsperren 3a und 5 sind elektrisch entsperrbar. Allen Rädern sind Geschwindigkeitsgeber 1a' - 1d' zugeordnet, die mit einer ABS - Regeleinrichtung 6 verbunden sind. Diese erkennt Blockierneigungen an den Räder und beeinflußt Ventile im Block 7. Über die Ventile im Block 7 kann getrennt der Druck an den einzelnen Radbremsen über die Leitungen 8 variiert werden.

Um bei diesem so angetriebenen Fahrzeug das ABS voll wirksam werden zu lassen, sollen im ABS - Fall die Längssperre 3a und die Quersperre 5 entsperrt sein. Dies wird dadurch erzielt, daß die von den Radgeschwindigkeitssensoren 1a - 1d abgeleiteten, der Auswerteschaltung 6 zugeführten Signale, in dieser Auswertschaltung 6 differenziert und die differenzierten Signale jeweils mit einer Verzögerungsschwelle von z. B. 4 m/sec$^2$ verglichen werden. Wird diese Schwelle überschritten, so gelangt ein Signal über eine der Leitungen 9 und ein Oder-Gatter 10 zu den Differentialsperren 3a und 5 und entsperrt diese. Wie bereits oben gesagt, ist die Verzögerungsschwelle derart gewählt, daß sie bei hohem $\mu$ praktisch nur bei Panikbremsung überschritten wird, daß jedoch dieser Verzögerungswert durch die Verzögerung der Räder bei Bremsen auf glatter Fahrbahn und bestehender Blockiergefahr überschritten wird.

### Patentansprüche

1. Antiblockierregelsystem für ein Fahrzeug, das wenigstens eine schaltbare Differentialsperre (3a, 5) aufweist, die durch ein Schaltsignal lösbar ist, um das Antiblockierregelsystem zur Wirkung kommen zu lasse, dadurch gekennzeichnet, daß die Verzögerung der Fahrzeugräder (1a - 1d) ermittelt wird und daß bei Auftreten einer Radverzögerung, die größer als ein nur bei hohem Reibbeiwert auftretender Fahrzeugverzögerungswert ist, das Schaltsignal erzeugt wird.

2. Antiblockierregelsystem nach Anspruch 1, gekennzeichnet durch seine Verwendung bei Fahrzeugen mit Allradantrieb und dadurch, daß wenigstens die Längssperre (3a) bei Auftreten des Schaltsignals entsperrt wird.

## Claims

1. Anti-skid system for a vehicle which has at least one switchable differential lock (3a,5), which can be released by a switching signal in order to allow the anti-skid system to come into effect, characterised in that the retardation of the vehicle wheels (1a-1d) is determined and in that the switching signal is produced upon occurrence of a wheel retardation which is greater than a vehicle retardation value which occurs in the case of a high coefficient of friction.

2. Anti-skid system according to Claim 1, characterised by its use in vehicles with all-wheel drive and by the fact that at least the longitudinal lock (3a) is unlocked upon occurrence of the switching signal.

## Revendications

1. Système de réglage anti-blocage pour un véhicule équipé d'au moins un verrou de différentiel (3a, 5), commutable, qui peut être déverrouillé par un signal de commutation pour permettre au système de réglage anti-blocage d'agir, système caractérisé en ce qu'on détermine la décélération des roues (1a-1d) du véhicule et en cas de décélération de roue supérieure à une valeur de décélération de véhicule qui ne se présente que pour un coefficient de friction élevé, il génère le signal de commutation.

2. Système de réglage anti-blocage selon la revendication 1, caractérisé par son application à des véhicules dont toutes les roues sont motrices et en ce que au moins le verrou longitudinal (3a) est déverrouillé lors de l'émission du signal de commutation.

FIG.1

EP 0 401 242 B1